# EUROPÄISCHE PATENTSCHRIFT

(11) **EP 0 364 432 B1**
(45) Veröffentlichungstag und Bekanntmachung des Hinweises auf die Patenterteilung: **10.02.1993**
(21) Anmeldenummer: 89890254.9
(22) Anmeldetag: 27.09.1989
(51) Int. Cl.: B60R 19/34, F16F 7/12

(54) **Pralldämpfer für Kraftfahrzeuge**
Shock absorber for motor vehicles
Amortisseur de choc pour véhicules automobiles

(30) Priorität: 28.09.1988 AT 2394/88
(43) Veröffentlichungstag der Anmeldung: 18.04.1990
(73) Patentinhaber: Austria Metall Aktiengesellschaft, A-5282 Braunau am Inn (AT)
(72) Erfinder: Garnweidner, Peter, A-5020 Salzburg (AT)
(74) Vertreter: Hain, Leonhard

(56) Entgegenhaltungen:
- DE-A- 2 129 138
- DE-A- 2 164 894
- FR-A- 2 181 044
- FR-A- 2 394 422

## Beschreibung

Die Erfindung bezieht sich auf einen Pralldämpfer für Kraftfahrzeuge mit einem Außen- und einem Innenrohr gemäß dem Oberbegriff des Patentanspruches 1.

Bei einem Pralldämpfer dieser Art (DE-A-2 129 138; FR-A-2 181 044) ist es bekannt, in einem Innenrohr einen elastischen Stoßdämpfer auszubilden. Dieser Stoßdämpfer verdrängt oder komprimiert mittels eines Kolbens Flüssigkeit oder Luft, um auf diese Weise leichtere Aufprallkräfte, wie sie bei leichten Zusammenstößen auftreten, aufzufangen und zu dämpfen. Das als Stoßdämpfer dienende Innenrohr ist zum Teil noch in ein Außenrohr hineingeschoben, das in diesem Aufnahmebereich ausgeweitet ist. Wirkt sodann auf diesen Pralldämpfer ein stärkerer Aufprall, dringt das Innenrohr, nachdem die Stoßdämpferwirkung erschöpft ist, in das Außenrohr ein und weitet dieses unter Dämpfung der kräftigen Aufprallstoßkraft aus. Dabei ergibt sich eine konstante Widerstandskraft, die dann erwünscht ist, wenn die elastische Federsteifigkeit eines Wagenaufbaues von Beginn eines Kollisionsvorganges an vollständig genützt werden soll. Die an diesen Pralldämpfern eingesetzten pneumatischen oder hydraulischen Stoßdämpfer wirken zwar elastisch und kehren nach Beseitigung der leichten Stoßkraft wieder in die Ausgangslage zurück, so daß ihre Erneuerung nicht notwendig ist, jedoch machen Druckkolben, deren Führung und Abdichtungen dieses Bauteil aufwendig und störungsanfällig. Ein anderer bekannter Pralldämpfer (DE-A-2 164 894) vermeidet einen Druckkolben-Stoßdämpfer durch einen in einem Hohlraum des Außenrohres untergebrachten Füllstoff, der beim Einschieben des Innenrohres in das Außenrohr in Nebenräume verdrängt wird, bevor es nach einem weiteren Zusammenschieben der beiden Rohre zu einer plastischen Verformung des Innen- oder Außenrohres kommt. Auch dieser Pralldämpfer ist aufwendig und kompliziert. Da der eingesetzte Ver.- drängungs-Füllstoff nicht kompressibel ist, kehrt das Innenrohr nicht mehr in die Ausgangslage zurück und dieser Pralldämpfer muß schon nach jedem leichteren Aufprall wieder zerlegt und instand gesetzt werden.

Der Erfindung liegt daher die Aufgabe zugrunde, einen Pralldämpfer zu schaffen, der eine elastische Stoßdämpfung vor der plastischen Verformung der beiden Rohre mit besonders einfachen und kostengünstigen Mitteln ermöglicht.

Diese Aufgabe wird an einem Pralldämpfer nach dem Oberbegriff des Patentanspruches 1 erfindungsgemäß durch die Kennzeichnungsmerkmale dieses Patentanspruches gelöst.

Vorteilhafte Weiterentwicklungen der Erfindung sind in Unteransprüchen beansprucht.

Bei diesem erfindungsgemäßen Pralldämpfer ist es möglich, bereits leichte Berührungsstöße, wie sie beispielsweise beim Einparken vorkommen, aufzufangen, wobei infolge der Elastizität des eingesetzten federnden Materials dieser im Innenrohr eingerichtete Stoßdämpfer nach Beseitigung der Aufprallkraft wieder in seine Ausgangslage zurückkehren kann und somit seine Erneuerung nicht notwendig wird. Dadurch, daß das Innenrohr aus zwei teleskopartig zusammenschiebbaren Rohren besteht und in dem Hohlraum dazwischen federndes Material untergebracht ist, wird ein sehr einfacher Stoßdämpfer für leichtere Stöße geschaffen. Erst wenn diese beim Zusammenschieben des Innenrohres sich aufbauende Widerstandskraft überschritten wird, kommt es zum Ineinanderschieben des Innenrohres in das Außenrohr und damit zu einer plastischen Verformung. Da der Übergang vom kleinkalibrigen Innenrohrteil zum größeren außenliegenden Innenrohrteil konisch geformt ist, wird eine gleichmäßige Verformung über den gesamten Umfang des Außenrohres erreicht und ein Verklemmen oder Aufreißen dieses Rohres vermieden.

Zweckmäßig weist das Innenrohr im Bereich des konischen Überganges eine Verstärkung auf, um so sicherzustellen, daß die Verformung nur am Außenrohr auftreten kann. Zum einfachen Zusammenbau des Pralldämpfers ist es vorteilhaft, daß im innenliegenden Rohrteil am Durchmesser-Übergang eine umlaufend berührende Verstärkung angeordnet ist, die mittels einer Verschraubung das Innenrohr gegen das Außenrohr spannt.

Außerdem ist es auch für einen einfachen Gesamtaufbau des Pralldämpfers günstig, wenn das Außenrohr an seinem äußeren Ende einen Boden aufweist, in dem die das Innenrohr gegen das Außenrohr verspannende, in der Rohrachse liegende Schraube befestigt ist. Diese Schraube spannt die einzelnen Teile dabei nicht nur zusammen, sondern es kann mit ihr auch die Vorspannung des Rohres je nach Bedarf geändert und so die Anfangskraft zu Beginn der Umformung eingestellt werden.

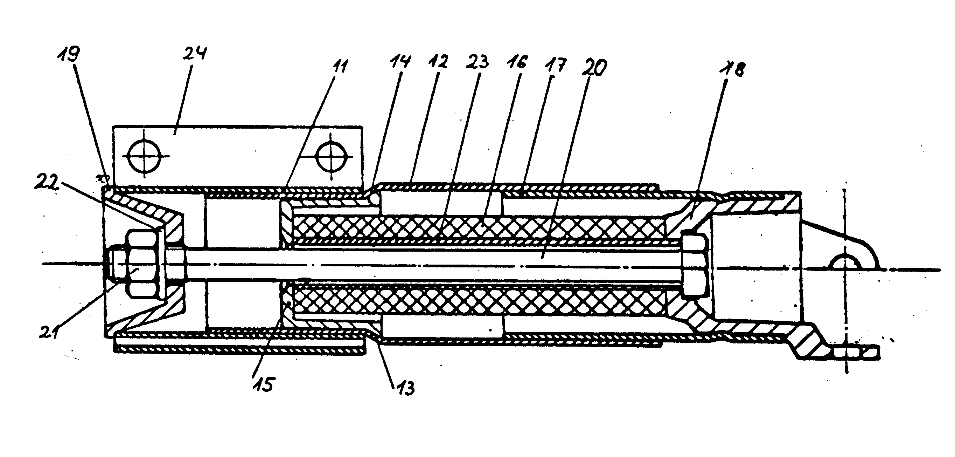

Die Erfindung wird nachfolgend anhand eines Ausführungsbeispiels, das auch in der Zeichnung schematisiert dargestellt ist, näher beschrieben.

In ein Außenrohr 11 ragt mit einem Abschnitt ein Innenrohr 12 hinein, das mit einem anderen Abschnitt aus dem Außenrohr noch herausragt. Der herausragende Teil des Innenrohres weist einen Außendurchmesser auf, der größer als der Innendurchmesser des Außenrohres ist. Der Übergang 13 zwischen den beiden Zonen ist konisch ausgebildet.

Um Außenrohr 11 und Innenrohr 12 zusammenschieben zu können, muß entweder das Außenrohr aufgeweitet oder das Innenrohr eingezogen werden. Die für diesen Vorgang benötigte Umformkraft ist unabhängig von der zu verformenden Rohrwand und ist bei gleichbleibender Wandstärke konstant. Je nach Wahl der Wandstärkenverhältnisse kann also eine Verformung des Innen- oder des Außenrohres erzielt werden. Durch die Wahl des Konuswinkels am Übergang 13 am Innenrohr 12 kann die Verformungskraft zum Aufdehnen des Außenrohres 11 verändert werden.

Beim dargestellten Ausführungsbeispiel ist in das Innenrohr 12 ein Endrohr 17 eingeführt. Der aus dem Außenrohr 11 herausragende Teil des Innenrohres 12 liegt mit dem konischen Übergang 13 an diesem berührend an. Im Bereich dieses Überganges 13 und des im Außenrohr 11 liegenden Teiles des Innenrohres 12 ist eine Verstärkung 14 angeordnet, wodurch sichergestellt ist, daß im Belastungsfall ein Aufweiten des Außenrohres 11 erfolgt. Diese Verstärkung 14 weist einen Boden 15 auf. In dem zwischen diesem Boden 15 und der am Endrohr 17 angebrachten Prallschildbefestigung 18 ist elastisches Material 16 angeordnet. Die Rohre 11,12 und 17 sind durch eine Schraube 20 zusammengespannt, wobei die Schraube 20 in der gedachten Rohrachse liegt und in der Prallstangenbefestigung 18 und im Abschlußteil 19 des Außenrohres 11 mittels Mutter 21 und Scheibe 22 befestigt ist. Eine am Schraubenkopf angreifende Spannhülse 23 drückt über die Verstärkung 14 und das Innenrohr 12 gegen das Außenrohr 11. Zur Anbringung des Pralldämpfers am Wagenbau ist eine Anschlußplatte 24 am Außenrohr 11 angeordnet.

## Patentansprüche

1. Pralldämpfer für Kraftfahrzeuge mit einem Außenrohr (11), einem aus diesem Außenrohr teilweise herausragenden Innenrohr (12), das im herausragenden Rohrteil einen größeren Außendurchmesser als der Innendurchmesser des Außenrohres aufweist und einem im Innenrohr ausgebildeten federnden Stoßdämpfer, der bei einem Aufprall wirksam wird, bevor das in das Außenrohr hineinschiebbare Innenrohr das Außenrohr plastisch verformt, dadurch gekennzeichnet, daß das Innenrohr (12) im außenliegenden Teil ein im Innenrohr verschiebbares, über das Innenrohr hinausstehendes Endrohr (17) aufweist, dieses Innenrohr (12) an seinem im Außenrohr (11) befindlichen Teil durch einen Boden (15) und im Endrohr (17) durch eine Prallschildbefestigung (18) abgeschlossen und im freien Rohrraum dazwischen ein federndes Material (16) an diesen Böden (15,18) abgestützt ist.

2. Pralldämpfer nach Anspruch 1, dadurch gekennzeichnet, daß im Innenrohr (12) am Durchmesser-Übergang (13) eine umlaufende Verstärkung (14) vorgesehen ist.

3. Pralldämpfer nach Anspruch 2, dadurch gekennzeichnet, daß die Verstärkung (14) im Innenrohr (12) den Boden (15) aufweist.

4. Pralldämpfer nach einem der Ansprüche 1 bis 3, dadurch gekennzeichnet, daß Innenrohr (12) und Außenrohr (11) an dem verstärkten Durchmesser-Übergang (13) mittels einer Verschraubung (20) verspannt sind.

5. Pralldämpfer nach einem der Ansprüche 1 bis 4, dadurch gekennzeichnet, daß das Außenrohr (11) an seinem äußeren Ende einen Boden (19) aufweist, in dem die das Innenrohr (12) gegen das Außenrohr (11) verspannende, in der Rohrachse liegende Verschraubung (20) befestigt ist.

## Claims

1. An impact damper for motor vehicles comprising an outer tube (11), an inner tube (12) which partially projects out of the outer tube and which in the outwardly projecting part of the tube is of larger outside diameter than the inside diameter of the outer tube, and a resilient shock absorber which is provided in the inner tube and which becomes effective in the event of an impact before the inner tube which is displaceable into the outer tube plastically deforms the outer tube, characterised in that in the outwardly disposed part the inner tube (12) has an end tube (17) which is displaceable in the inner tube and which extends beyond the inner tube, said inner tube (12) is closed by an end portion (15) at its part disposed in the outer tube (11) and by an impact bumper fixing (18) in the end tube (17), and in the free space in the tube therebetween a resilient material (16) is supported against said end portions (15, 18).

2. An impact damper according to claim 1 characterised in that a peripherally extending reinforcement means (14) is provided in the inner tube (12) at the diameter transition (13).

3. An impact damper according to claim 2 characterised in that the reinforcement means (14) in the inner tube (12) has the end portion (15).

4. An impact damper according to one of claims 1 to 3 characterised in that the inner tube (12) and the outer tube (11) are braced at the reinforced diameter transition (13) by means of a screw (20).

5. An impact damper according to one of claims 1 to 4 characterised in that at its outer end the outer tube (11) has an end portion (19) in which is fixed the screw (20) which is disposed on the tube axis and which braces the inner tube (12) against the outer tube (11).

## Revendications

1. Amortisseur de choc pour véhicules automobiles, comportant un tube extérieur (11), un tube intérieur (12) qui sort partiellement de ce tube extérieur et présente, dans sa portion tubulaire sortie, un diamètre extérieur supérieur au diamètre intérieur du tube extérieur, et comportant aussi un amortisseur élastique de heurt qui est placé dans le tube intérieur et qui, en cas de choc, intervient avant que le tube intérieur, -qui peut coulisser dans le tube extérieur, déforme plastiquement ce tube extérieur, amortisseur caractérisé par le fait que le tube intérieur (12) présente, dans sa portion située à l'extérieur, un tube d'extrémité (17) qui peut coulisser dans le tube intérieur et se tient, extérieurement, au-delà du tube intérieur, par le fait que ce tube intérieur (12) est obturé, à sa portion oui se trouve dans le tube extérieur (12), par un fond (15) et, dans le tube d'extrémité (17), par une fixation (18) de l'amortisseur de choc; et par le fait que,dans l'espace tubulaire libre existant entre eux, un matériau élastique (16) s'appuie contre ces fonds (15,18).

2. Amortisseur de choc selon la revendication 1, caractérisé par le fait que dans le tube intérieur (12), à la transition de diamètre (13), est prévu un renfort périphérique (14).

3. Amortisseur de choc selon la revendication 2, caractérisé par le fait que le renfort (14) prévu dans le tube intérieur (12) comporte le fond (15).

4. Amortisseur de choc selon l'une des revendications 1 à 3, caractérisé par le fait qu'à la transition de diamètre renforcé (13) le tube intérieur (12) et le tube extérieur (11) sont contraints l'un contre l'autre au moyen d'un boulonnage (20).

5. Amortisseur de choc selon l'une des revendications 1 à 4, caractérisé par le fait qu'à son extrémité extérieure le tube extérieur (11) présente un fond (19) dans lequel est fixé le boulonnage (20), situé dans l'axe géométrique, qui contraint le tube intérieur (12) contre le tube extérieur (11).
